# EUROPÄISCHE PATENTSCHRIFT

(11) **EP 1 667 299 B1**
(45) Veröffentlichungstag und Bekanntmachung des Hinweises auf die Patenterteilung: **01.10.2008**
(21) Anmeldenummer: 05026314.4
(22) Anmeldetag: 02.12.2005
(51) Int. Cl.: H02G 3/18

(54) **Bodenauslass für Unterflur-Installationssysteme**
Floor outlet for underfloor installation system
Prise de sol pour système d'installation sous plancher.

(30) Priorität: 03.12.2004 DE 202004018688 U
(43) Veröffentlichungstag der Anmeldung: 07.06.2006
(73) Patentinhaber: Tehalit GmbH, 67716 Heltersberg (DE)
(72) Erfinder: Vatter, Klaus, 66978 Clausen (DE); Szabo, Thomas, 66849 Landstuhl (DE); Schneckmann, Horst, 67705 Trippstadt (DE); Kauf, Peter, 66482 Zweibrücken (DE)
(74) Vertreter: Patentanwälte Möll und Bitterich

(56) Entgegenhaltungen:
- DE-A1- 2 408 273
- DE-A1- 3 403 053
- DE-U1- 7 627 374
- FR-A1- 2 840 741

## Beschreibung

Die Erfindung betrifft Bodenauslässe für Unterflur-Installationssysteme gemäß dem Oberbegriff des Anspruchs 1.

Aus der DE 72 33 986 U ist ein in Decken, insbesondere Betondecken, einbringbares Durchführungsrohr für elektrische Leitungen bekannt, welches wenigstens an seinem oberen Ende mit einem Gewindering versehen ist, in welchen ein Ausgleichsring eingeschraubt ist, der direkt oder über einen weiteren Ausgleichsring einen Tragring aufnimmt, in den ein Montagering zum Anbringen eines elektrischen Anschlussgerätes oder dergleichen eingesetzt ist.

Aus der DE 24 08 273 ist ein weiteres Deckendurchführungsrohr für Unterflur-Installationssysteme bekannt. Dieses ist mit einem Gewindering versehen, der einen Kragen zum Auflegen auf den Rand des Durchführungsrohrs besitzt und mit einem in ihm verschraubbaren Befestigungsring versehen ist, der an seiner Unterseite über Schrauben mit einem Arretierungsring in Verbindung steht, der an seitlichen Vorsprüngen an der Innenseite des Durchführungsrohrs axial festlegbar ist. Durch diese Ausgestaltung soll es möglich sein, den gesamten korrosionsempfindlichen Höhenausgleichsmechanismus von der Rohbauphase fernzuhalten, da alle Gewinde- und Metallteile von den korrosionsunempfindlichen Teilen trennbar sind.

Diese bekannten Konstruktionen sind nur für den Einbau während der Erstellung der Decken und Böden, jedoch nicht für den nachträglichen Einbau geeignet.

Der vorliegenden Erfindung liegt die Aufgabe zugrunde, einen Bodenauslass für Unterflur-Installationen anzugeben, der insbesondere für eine nachträgliche Installation geeignet ist.

Diese Aufgabe wird gelöst durch einen Bodenauslass mit den Merkmalen des Anspruchs 1.

Wesentlicher Vorteil der vorliegenden Erfindung ist die einfache Montage von oben in einer Bohrung im Doppelboden. Dies ist bedingt durch die Befestigung mittels Spreizfingern, die über Spannschrauben, meist sind es nur zwei, gleichmäßig aktiviert werden.

Gemäß einer ersten Weiterbildung ist ein Deckel mit L-förmigen Füßen vorgesehen. Diese kooperieren mit Bajonettnuten in der Innenseite des Grundrings. Dank der Bajonettnuten, die in zwei Höhen vorgesehen sein können, lässt sich der Deckel in zwei Höhen arretieren. In der unteren Position verschließt der Deckel den Bodenauslass komplett, in der oberen Position ist ein sicherer Kabelauslass möglich.

Weitere Vorteile lassen sich realisieren, wenn Grundring und Kragenring mit korrespondierenden Gewinden ausgerüstet sind. Dadurch ist nicht nur eine Längenanpassung möglich, sondern es lassen sich auch weitere Zusatzteile montieren.

Vorteilhafterweise sind in den Deckel Grifflöcher eingeformt. Dies ermöglicht eine einfache Montage und Demontage.

Um die Grifflöcher verdecken zu können, ist eine Abdeckplatte vorgesehen, die an ihrer Unterseite einen zentralen Stift besitzt, der mit einer zentralen Öffnung im Deckel korrespondiert.

Ein alternativer Deckel ist dadurch gekennzeichnet, dass ein oder zwei Klappen angelenkt sind. Sind diese Klappen angehoben, ermöglichen sie den Durchtritt von Anschlussleitungen und -kabeln. Sind die Klappen geschlossen, ergibt sich eine glatte Oberfläche.

Vorteilhafterweise sind an der Klappe Formteile zur formschlüssigen Befestigung einer Flachkette angeformt. Derartige Flachketten haben die Aufgabe, die auf dem Boden liegenden Anschlussleitungen und -kabel gegen Beschädigung zu schützen.

Ein bevorzugtes Zusatzteil ist ein erster Zusatzring, der ein Außengewinde besitzt, welches mit dem Gewinde des Kragenrings kooperiert, und ein Zylinderteil besitzt, in dessen Innenwand Bajonettnuten für den ersten Deckel angebracht sind. Dieser Zusatzring ist vorzugsweise mit Dichtungen ausgerüstet. Wird er so eingeschraubt, dass das Zylinderteil nach oben schaut, so ist der Kabelauslass auch bei geöffnetem Deckel nassfest. Nassfest bedeutet, dass der Boden, in dem der Bodenauslass montiert ist, nass gesäubert werden kann, ohne dass Reinigungsflüssigkeit in den Bodenauslass fließt.

Wird der Zusatzring umgedreht, so dass der Zylinderteil nach unten gerichtet ist, so verschwindet das Zusatzteil im Boden. Wird der Bodenauslass völlig verschlossen, so fluchtet die Oberseite des Deckels mit dem Boden.

Die gleichen Funktionen erfüllt auch ein zweiter Zusatzring. Dieser besitzt einen zylindrischen Außenflansch mit O-Ring-Dichtung und ein Konusteil, an dessen Ende außen Bajonettnasen angeformt sind, die einen dritten Deckel aufnehmen. Für eine zusätzliche Schraubbefestigung des Zusatzrings können an geeigneten Stellen Bohrungen für Befestigungsschrauben vorbereitet bzw. vorgesehen sein.

Dieser dritte Deckel ist dadurch gekennzeichnet, dass er einen zylindrischen Außenflansch mit einer O-Ring-Dichtung besitzt, passend zu dem zweiten Zusatzring. Des weiteren besitzt er rückseitig Füße mit eingeformten Bajonettnuten, die mit den Bajonettnasen am zweiten Zusatzring kooperieren.

Anhand der Zeichnung soll die Erfindung in Form von Ausführungsbeispielen näher erläutert werden. Es zeigen
- Fig. 1: einen Schnitt durch einen Bodenauslass für trocken zu reinigende Böden mit hochgestelltem ersten Deckel,
- Fig. 2: eine isometrische Darstellung des Grundrings aus Fig. 1,
- Fig. 3: eine isometrische Darstellung des Deckels aus Fig. 1,
- Fig. 4: eine isometrische Ansicht des Bodenauslasses der Fig. 1 mit zweitem Deckel,
- Fig. 5: eine isometrische Darstellung eines ersten Zusatzrings,
- Fig. 6: einen Bodenauslass für nass zu reinigende Böden mit dem Zusatzring der Fig. 5 und geöffnetem Deckel,
- Fig. 7: den Bodenauslass der Fig. 6 komplett geschlossen,
- Fig. 8: eine isometrische Darstellung eines zweiten Zusatzrings und
- Fig. 9: eine isometrische Rückansicht eines zu dem Zusatzring der Fig. 8 passenden dritten Deckels.

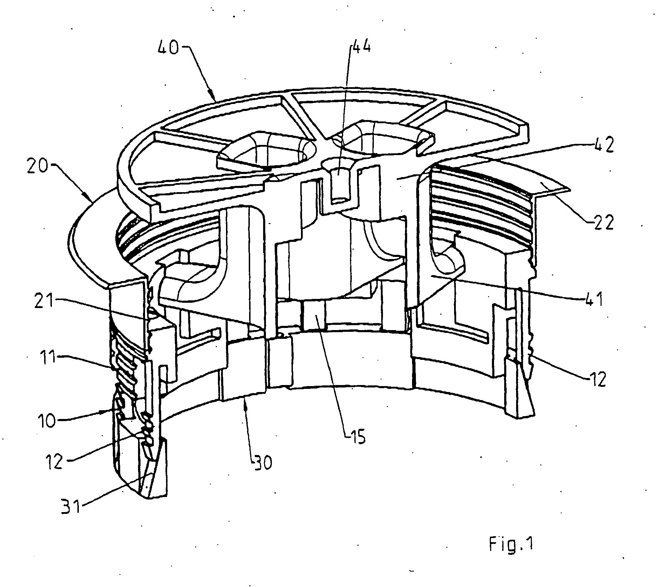

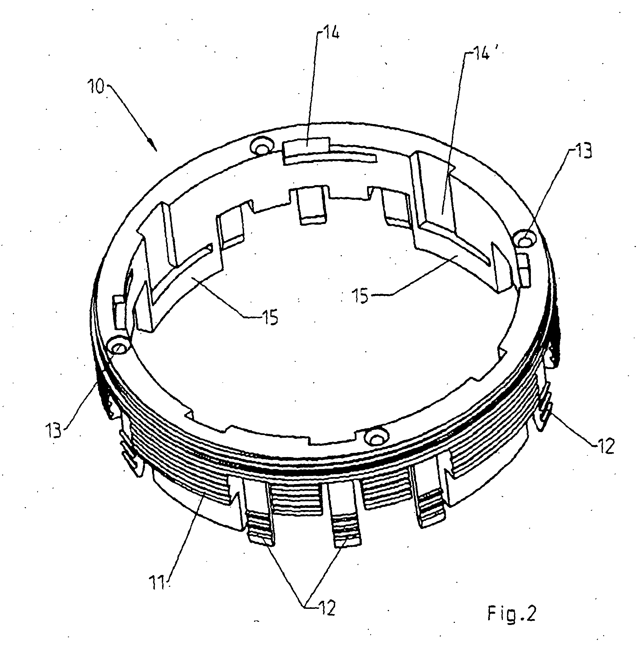

Fig. 1 zeigt einen Schnitt durch einen Bodenauslass für trocken zu reinigende Böden. Man erkennt einen Grundring 10 mit Außengewinde 11, an dessen unterem Rand eine Mehrzahl von Spreizfingern 12 angeformt ist. Einzelheiten des Grundrings 10 sollen anhand der Fig. 2 erläutert werden.

Auf das Außengewinde 11 des Grundrings 10 ist ein Kragenring 20 mit Hilfe seines Gewindes 21 aufgeschraubt. Mit Hilfe von Spannschrauben (nicht dargestellt) ist am Grundring 10 ein Spreizring 30 höhenverstellbar befestigt. Der Spreizring 30 besitzt Spreizschrägen 31, die mit den Spreizfingern 12 kooperieren. Wird der Spreizring 30 nach oben gezogen, so werden die Spreizfinger 12 nach außen gedrückt, wo sie sich an den Rand einer Bodenbohrung (nicht dargestellt) anlegen und so den Grundring 10 fixieren.

Zur Führung des Spreizrings 30 sind am Grundring 10 Führungsleisten 15 angeformt.

Fig. 2 zeigt den Grundring 10 in einer isometrischen Darstellung. Man erkennt die Spreizfinger 12, die am unteren Rand verteilt sind, sowie die Führungsleisten 15. Des weiteren erkennt man Bohrungen 13 für die Spannschrauben, die den Spreizring 30 heben.

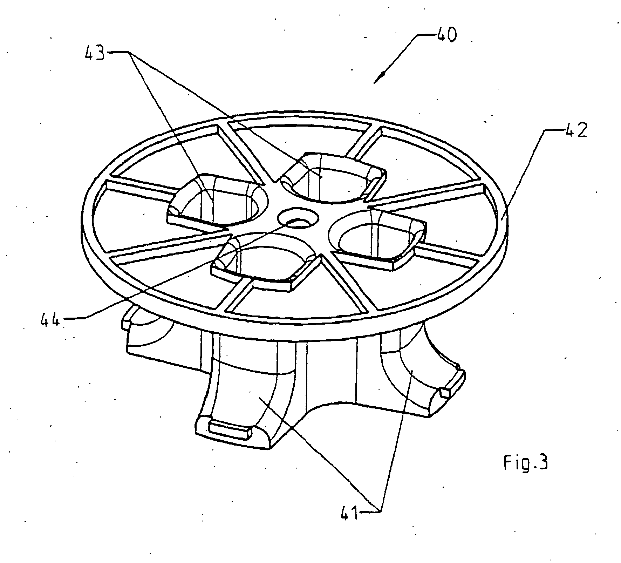

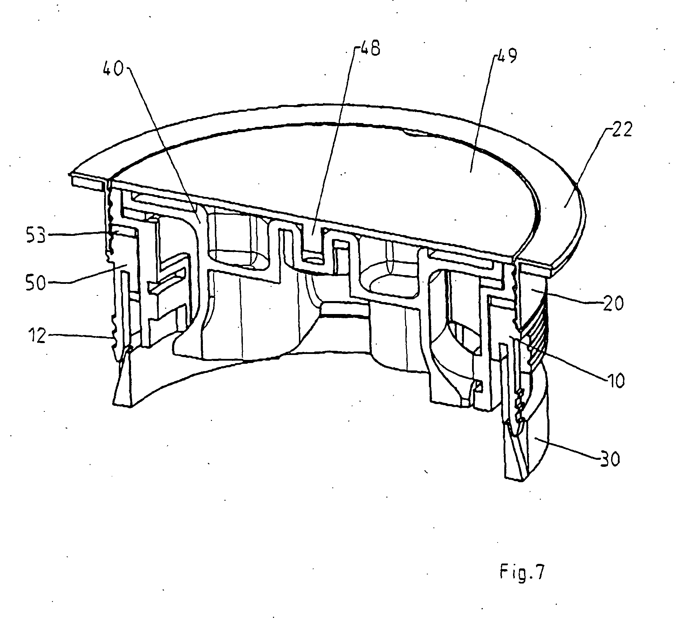

In die Innenwand des Grundrings 10 sind Bajonettnuten 14, 14' eingeformt, und zwar in zwei Höhen. Mit diesen Bajonettnuten 14, 14' kooperieren L-förmige Füße 41 an einem ersten Deckel 40, der anhand der Fig. 3 näher erläutert werden soll. Die Bajonettnuten 14, 14' sind in zwei Höhen vorgesehen, so dass der Deckel 40 entweder in der angehobenen Position (Fig. 1) arretiert werden kann, was einen ungehinderten Kabelauslass ermöglicht, oder in der abgesenkten Position (Fig. 7), in der er den Kabelauslass verschließt.

Fig. 3 zeigt in einer isometrischen Darstellung den ersten Deckel 40. Man erkennt die L-förmigen Füße 41 an der Unterseite der Deckelplatte 42. In die Deckelplatte 42 sind Grifflöcher 43 eingeformt, mit deren Hilfe ein Benutzer den Deckel 40 bequem manipulieren kann.

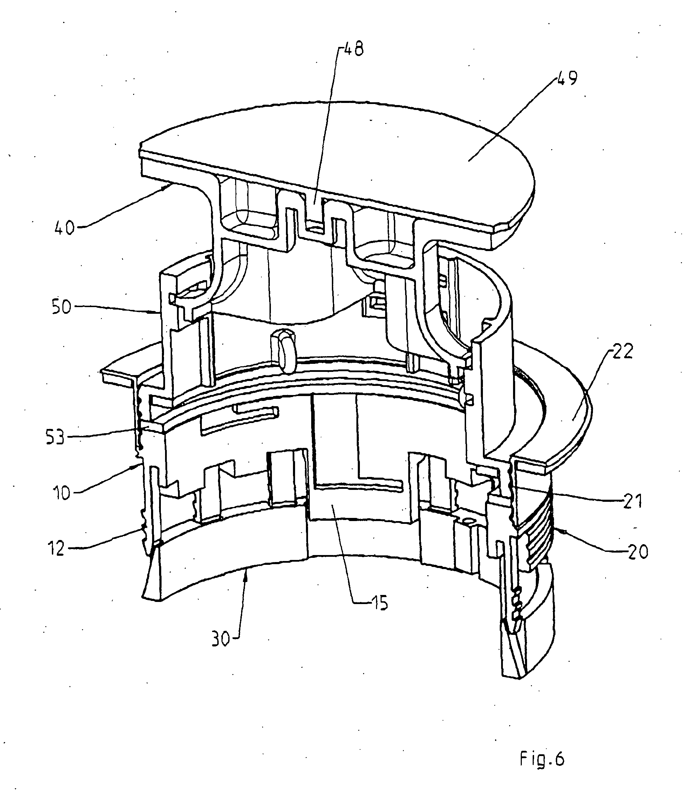

Im Zentrum der Deckelplatte 42 erkennt man eine Vertiefung 44, mit deren Hilfe eine Abdeckplatte 49 (Fig. 6 und 7) mit angeformtem Zentrierstift 48 befestigt werden kann.

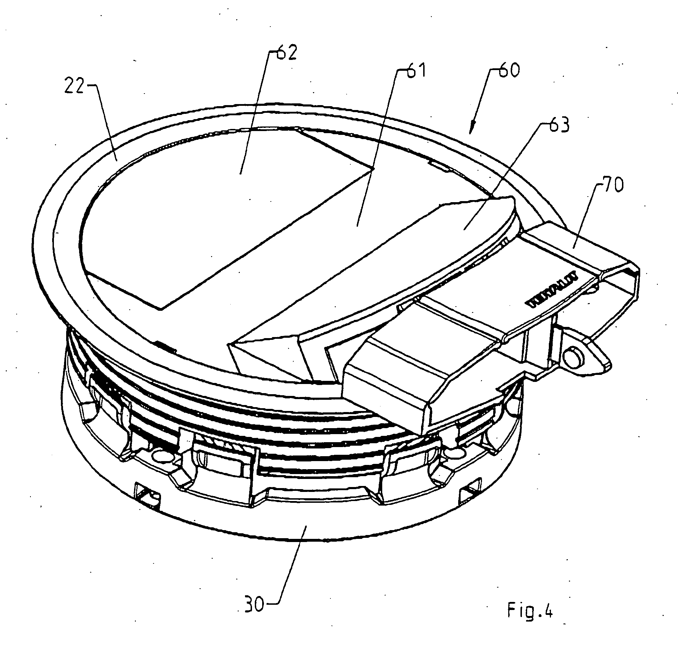

Fig. 4 zeigt eine isometrische Ansicht des Bodenauslasses der Fig. 1 mit alternativem Deckel 60. Dieser umfasst eine Basisfläche 61, an der einander gegenüberliegend zwei Klappen 62, 63 angelenkt sind. Die linke Klappe 62 ist geschlossen, ihre Oberfläche fluchtet mit der Deckelbasis 61 und dem Kragen 22 des Kragenrings 20. Die rechte Klappe 63 ist hochgeklappt, so dass Anschlussleitungen und -kabel eingeführt werden können. Die Klappe 63 besitzt angeformte Formteile, an denen eine Flachkette 70 abnehmbar befestigt ist. Derartige Flachketten nehmen die Anschlussleitungen und - kabel auf und schützen sie gegen Beschädigung.

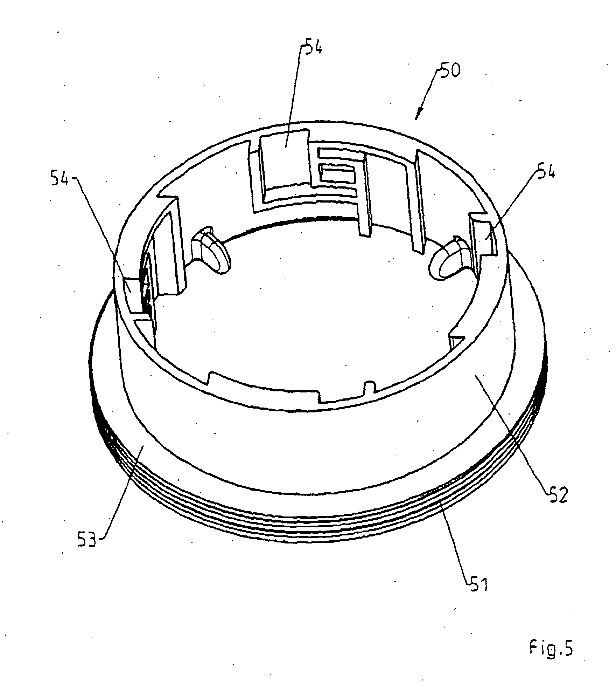

Fig. 5 zeigt in isometrischer Darstellung einen ersten Zusatzring 50, mit dessen Hilfe der in Fig. 1 dargestellte Bodenauslass so abgedichtet werden kann, dass er für nass gereinigte Böden geeignet ist.

Der Zusatzring 50 besitzt ein Außengewinde 51, das mit dem Gewinde 21 des Kragenrings 20 kooperiert. Des weiteren besitzt der Zusatzring 50 ein Zylinderteil 52, an dessen Innenwand Bajonettnuten 54 vorgesehen sind, die mit den L-förmigen Füßen 41 des ersten Deckels 40 kooperieren.

Am Zusatzring 50 sind Dichtungen 53 vorgesehen, die den Zusatzring 50 gegen den Grundring 10 abdichten. Damit ist das Eindringen von Feuchtigkeit verhindert.

Fig. 6 zeigt eine erste Anwendung des Zusatzrings 50 der Fig. 5 bei dem Bodenauslass der Fig. 1. Der Zusatzring 50 ist so in das Gewinde des Kragenrings 20 geschraubt, dass das Zylinderteil 52 nach oben gerichtet ist. Dadurch steht es über den Kragen 22 des Kragenrings 20, der direkt auf der Oberfläche des Bodens (nicht dargestellt) aufliegt, über. Wird der Boden nass gereinigt, kann die Reinigungsflüssigkeit nicht in den Bodenauslass laufen.

Fig. 7 zeigt den Bodenauslass der Fig. 6 in seiner völlig geschlossenen, deaktivierten Position. Der Zusatzring 50 wurde umgedreht montiert, so dass sein Zylinderteil 52 sich innerhalb des Grundrings 10 befindet. Der Deckel 40 ist geschlossen. Die Abdeckplatte 49 deckt den Deckel 40 und dessen Grifflöcher ab. Der Bodenauslass ist bodengleich.

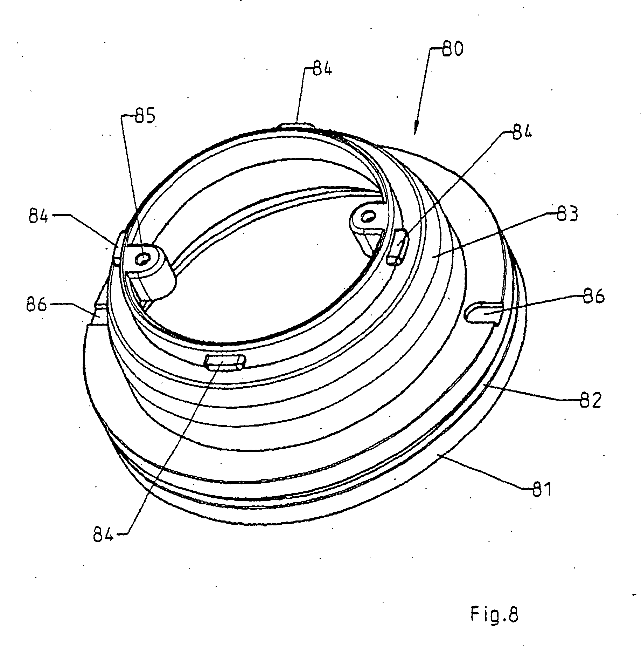

Fig. 8 zeigt einen zweiten Zusatzring 80, der die Nassreinigung der Böden ermöglicht. Der Zusatzring 80 besitzt einen zylindrischen Außenflansch 81, mit einer O-Ring-Dichtung 82, der in den Kragenring 20 eingedrückt werden kann. Des weiteren besitzt der Zusatzring 80 ein Konusteil 83, an dessen Ende außen Bajonettnasen 84 angeformt sind. Das Konusteil 83 ist so dimensioniert, dass es in den Grundring 10 abgesenkt werden kann, wenn kein Kabelauslass benötigt wird.

Angeformte Konsolen 85 mit Bohrungen für Befestigungsschrauben sowie vorbereitete Bohrungen 86 für weiteren Befestigungsschrauben ermöglichen bei Bedarf eine zusätzliche Befestigung des Zusatzrings 80 am Grundring 10.

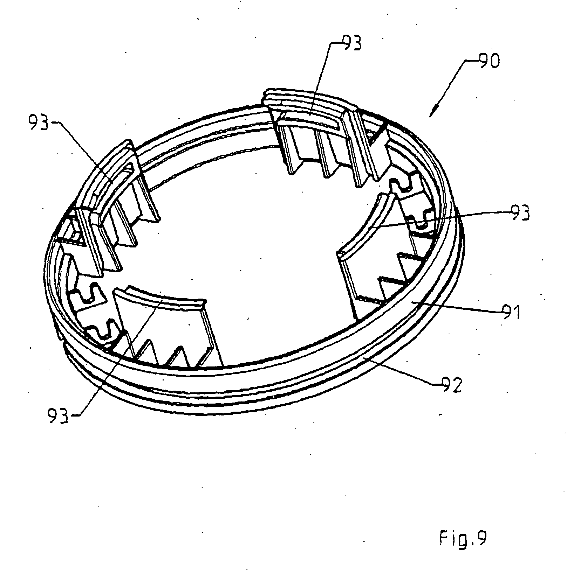

Fig. 9 zeigt eine Rückansicht eines dritten, zu dem Zusatzring 80 der Fig. 8 passenden Deckels 90. Der Deckel 90 besitzt einen zylindrischen Außenflansch 91 mit einer O-Ring-Dichtung 92. Außenflansch 91 und O-Ring 92 sind so dimensioniert, dass der Deckel 90 in den Flansch 81 des zweiten Zusatzrings 80 eingedrückt werden kann, wenn kein Kabelauslass benötigt wird.

Außerdem sind Füße 93 mit eingeformten Bajonettnuten vorgesehen, die auf die Bajonettnasen 84 am zweiten Zusatzring 80 aufgerastet werden, wenn ein Kabelauslass benötigt wird.

## Patentansprüche

1. Bodenauslass für Unterflurinstallationssysteme, umfassend
- einen Grundring (10) mit Außengewinde (11),
- einen Kragenring (20) mit Gewinde (21), passend auf das Außengewinde (11),
- Spannschrauben
- und einen abnehmbaren Deckel (40, 60, 90),
**gekennzeichnet durch** die Merkmale:
- am Grundring (10) ist eine Mehrzahl von Spreizfingern (12) vorgesehen,
- unter dem Grundring (10) befindet sich ein Spreizring (30),
- der Spreizring (30)
- besitzt Spreizschrägen (31), die mit den Spreizfingern (12) kooperieren
- und ist mit Hilfe der Spannschrauben relativ zum Grundring (10) heb- und senkbar.

2. Bodenauslass nach Anspruch 1, **gekennzeichnet durch** das Merkmal:
- der Deckel (40)
- besitzt L-förmige Füße (41, 42),
- die Füße (41, 42) kooperieren mit Bajonett-Nuten (14) an der Innenseite des Grundrings (10).

3. Bodenauslass nach Anspruch 1 oder 2, **gekennzeichnet durch** das Merkmal:
- die Bajonett-Nuten (14) sind in zwei Höhen eingeformt.

4. Bodenauslass nach einem der Ansprüche 1 bis 3, **gekennzeichnet durch** das Merkmal:
- in den Deckel (40) sind Grifflöcher (43) eingeformt.

5. Bodenauslass nach einem der Ansprüche 1 bis 4, **gekennzeichnet durch** die Merkmale:
- in den Deckel (40) ist eine zentrale Vertiefung (44) eingeformt,
- in die Vertiefung (44) passt ein zentraler Stift (48) an einer Abdeckplatte (49).

6. Bodenauslass nach Anspruch 1, **gekennzeichnet durch** das Merkmal:
- an den Deckel (60) sind ein oder zwei Klappen (62, 63) angelenkt.

7. Bodenauslass nach Anspruch 6, **gekennzeichnet durch** das Merkmal:
an der Klappe (63) sind Formteile zur formschlüssigen Befestigung einer Flachkette (70) angeformt.

8. Bodenauslass nach einem der Ansprüche 1 bis 7, **gekennzeichnet durch** die Merkmale:
- es ist ein Zusatzring (50) vorgesehen mit
- einem Außengewinde (51), das mit dem Gewinde (21) des Kragenrings (20) kooperiert,
- einem Zylinderteil (52)
- und Bajonett-Nuten (54) in der Innenwand des Zylinderteils (52).

9. Bodenauslass nach Anspruch 8, **gekennzeichnet durch** das Merkmal:
- das Zylinderteil (52) passt **durch** Grundring (10) und Spreizring (30).

10. Bodenauslass nach einem der Ansprüche 1 bis 7, **gekennzeichnet durch** das Merkmal:
- es ist ein Zusatzring (80) vorgesehen mit
- einem zylindrischen Außenflansch (81),
- einem Konusteil (83)
- und Bajonettnasen (84) an der Außenseite des Konusteils (83).

11. Bodenauslass nach Anspruch 10, **gekennzeichnet durch** das Merkmal:
- der Zusatzring (80) besitzt Konsolen (85) mit Öffnungen für Befestigungsschrauben.

12. Bodenauslass nach Anspruch 10 oder 11, **gekennzeichnet durch** das Merkmal:
- der Zusatzring (80) besitzt vorbereitete Öffnungen (86) für Befestigungsschrauben.

13. Bodenauslass nach wenigstens einem der Ansprüche 10 bis 12, **gekennzeichnet durch** das Merkmal:
- der Deckel (90) besitzt
- einen zylindrischen Außenflansch (91),
- eine O-Ring-Dichtung (92)
- und Füße (93) mit Bajonettnuten, die mit den Bajonettnasen (84) am Zusatzring (80) kooperieren.

## Claims

1. Floor outlet for underfloor installation systems, comprising:
- a base ring (10) with an external thread (11),
- a collar ring (20) with a thread (21), matching the external thread (11),
- clamp screws
- and a removal cover (40, 60, 90),
**characterised by** the features:
- a plurality of spreader fingers (12) are provided on the base ring (10),
- a spreader ring (30) is located below the base ring (10),
- the spreader ring (30)
- has spreader inclinations (31) which co-operate with the spreader fingers (12)
- and can be raised and lowered relative to the base ring (10) by means of the clamp screws.

2. Floor outlet according to Claim 1, **characterised by** the feature:
- the cover (40)
- has L-shaped feet (41, 42),
- the feet (41, 42) co-operate with bayonet grooves (14) on the inside of the base ring (10).

3. Floor outlet according to Claim 1 or 2, **characterised by** the feature:
- the bayonet grooves (14) are formed in in two heights.

4. Floor outlet according to any one of Claims 1 to 3, **characterised by** the feature:
- handle holes (43) are formed into the cover (40).

5. Floor outlet according to any one of Claims 1 to 4, **characterised by** the features:
- a central depression (44) is formed into the cover (40),
- a central pin (48) on a cover plate (49) fits into the depression (44).

6. Floor outlet according to Claim 1, **characterised by** the feature:
- one or two flaps (62, 63) is or are articulated to the cover (60).

7. Floor outlet according to Claim 6, **characterised by** the feature:
- moulded parts for positively fastening a flat chain (70) are formed on the flap (63).

8. Floor outlet according to any one of Claims 1 to 7, **characterised by** the features:
- an additional ring (50) is provided with
- an external thread (51) which co-operates with the thread (21) of the collar ring (20),
- a cylindrical part (52)
- and bayonet grooves (54) in the inner wall of the cylindrical part (52).

9. Floor outlet according to Claim 8, **characterised by** the feature:
- the cylindrical part (52) fits through the base ring (10) and the spreader ring (30).

10. Floor outlet according to any one of Claims 1 to 7, **characterised by** the feature:
- an additional ring (80) is provided with
- a cylindrical external flange (81),
- a cone part (83)
- and bayonet lugs (84) on the outside of the cone part (83).

11. Floor outlet according to Claim 10, **characterised by** the feature:
- the additional ring (80) has brackets (85) with openings for fastening screws.

12. Floor outlet according to Claim 10 or 11, **characterised by** the feature:
- the additional ring (80) has prepared openings (86) for fastening screws.

13. Floor outlet according to at least one of Claims 10 to 12, **characterised by** the feature:
- the cover (90) has
- a cylindrical external flange (91),
- an O-ring seal (92)
- and feet (93) with bayonet grooves which co-operate with the bayonet lugs (84) on the additional ring (80).

## Revendications

1. Prise de sol pour des systèmes d'installation électrique sous plancher, comprenant :
- une bague de base (10) à filetage extérieur (11),
- une bague à collet (20) avec un filetage (21) s'adaptant sur le filetage extérieur (11),
- des vis de serrage
- et un couvercle amovible (40, 60, 90),
**caractérisée par** les caractéristiques suivantes :
- une pluralité de doigts écarteurs (12) sont prévus sur la bague de base (10),
- une bague d'écartement (30) se trouve en dessous de la bague de base (10),
- la bague d'écartement (30)
- possède des biais d'écartement (31) qui coopèrent avec les doigts écarteurs (12)
- et peut être relevée et abaissée par rapport à la bague de base (10) à l'aide de vis de serrage.

2. Prise de sol selon la revendication 1, **caractérisée par** la caractéristique suivante :
- le couvercle (40)
- possède des pieds (41, 42) en forme de L,
- les pieds (41, 42) coopèrent avec des rainures à baïonnette (14) sur la face intérieure de la bague de base (10).

3. Prise de sol selon la revendication 1 ou 2, **caractérisée par** la caractéristique suivante :
- les rainures à baïonnette (14) sont formées en deux hauteurs.

4. Prise de sol selon l'une des revendications 1 à 3, **caractérisée par** la caractéristique suivante :
- des orifices de préhension (43) sont formés dans le couvercle (40).

5. Prise de sol selon l'une des revendications 1 à 4, **caractérisée par** les caractéristiques suivantes :
- un évidement central (44) est formé dans le couvercle (40),
- un ergot central (48) d'une plaque de recouvrement (49) s'adapte dans l'évidement (44).

6. Prise de sol selon la revendication 1, **caractérisée par** la caractéristique suivante :
- deux ou plusieurs volets (62, 63) sont articulés sur le couvercle (60).

7. Prise de sol selon la revendication 6, **caractérisée par** la caractéristique suivante :
- des parties façonnées sont formées sur le volet (62) pour la fixation en engagement positif d'une chaîne plate (70).

8. Prise de sol selon l'une des revendications 1 à 7, **caractérisée par** les caractéristiques suivantes :
- il est prévu une bague supplémentaire (50) avec
- un filetage extérieur (51), qui coopère avec le filetage (21) de la bague à collet (20),
- une partie cylindrique (52)
- et des rainures à baïonnette (54) sur la paroi intérieure de la partie cylindrique (52).

9. Prise de sol selon la revendication 8, **caractérisée par** la caractéristique suivante :
- la partie cylindrique (52) rentre dans la bague de base (10) et la bague d'écartement (30).

10. Prise de sol selon l'une des revendications 1 à 7, **caractérisée par** la caractéristique suivante :
- il est prévu une bague supplémentaire (80) avec
- un rebord extérieur cylindrique (81),
- une partie conique (83)
- et des ergots à baïonnette (84) sur la face extérieure de la partie conique (83).

11. Prise de sol selon la revendication 10, **caractérisée par** la caractéristique suivante :
- la bague supplémentaire (80) possède des consoles (85) avec des ouvertures pour des vis de fixation.

12. Prise de sol selon la revendication 10 ou 11, **caractérisée par** la caractéristique suivante :
- la bague supplémentaire (80) possède des ouvertures préparées (86) pour des vis de fixation.

13. Prise de sol selon au moins une des revendications 10 à 12, **caractérisée par** la caractéristique suivante :
- le couvercle (90) possède
- un rebord extérieur cylindrique (91),
- un joint torique d'étanchéité (92)
- et des pieds (93) avec des rainures à baïonnette qui coopèrent avec les ergots à baïonnette (84) de la bague supplémentaire (80).
